(19) **Europäisches Patentamt / European Patent Office / Office européen des brevets**

(11) **EP 3 038 059 A1**

(12) # EUROPEAN PATENT APPLICATION

(43) Date of publication:
**29.06.2016 Bulletin 2016/26**

(51) Int Cl.:
**G06T 11/00** (2006.01)

(21) Application number: **14307126.4**

(22) Date of filing: **22.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Chamaret, Christel**
  **35576 Cesson-Sévigné (FR)**
• **Pouli, Tania Foteini**
  **35576 Cesson-Sévigné (FR)**
• **Kuzovkin, Dmitry**
  **35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Methods and systems for color processing of digital images**

(57) Systems and methods of coloring and re-coloring images are disclosed. A system including a processor and a memory can execute stored instructions to obtain (201) a first image, and to obtain (202) a color second image. The content of the second image is not the same as the content of the first image. Color can be selected (203) from the second image based one or more descriptors of the first and second images and based on a harmony descriptor. The harmony descriptor represents a color harmony of the second image. A color third image can be generated (204) based on the first image and the selected color.

FIG. 2

**Description**

TECHNICAL FIELD

The present disclosure generally relates to methods and systems for color processing of digital images and, more particularly, to methods and systems that color and re-color digital images.

BACKGROUND

Many computer-automated processes for colorization of grayscale images and re-coloring of color images require a large amount of human interaction in order to achieve satisfactory results, e.g., to identify visual objects in an image, to select appropriate colors for the visual objects, etc. While there are some highly-automated computer processes that require little or no human interaction, these processes typically produce results that suffer from visual artifacts and inappropriately colored areas.

SUMMARY

Described herein are various systems and methods for colorizing images and re-coloring images that may produce better results and at the same time may be highly-automated. A color reference image can be used to colorize or re-color a target image based on one or more descriptors of the target and reference images and a harmony descriptor that represents a color harmony of the second image. In various embodiments, for example, descriptors of the target and reference images can be analyzed to determine regions of the reference image that correspond to regions of the target image. The descriptors can include, for example, luminance, a histogram of oriented gradients, a histogram of texture gradients, etc. The analysis can be guided by a harmony descriptor of the reference image. For example, the analysis can search for reference image regions that are similar to target image regions based on similarity of luminance and texture gradients, and the analysis can be weighted based on a harmony descriptor such that the analysis favors reference image regions having colors that are more harmonious. When correspondence is found between a reference image region and a target image region, the color of the reference image region can be used to colorize or re-color the corresponding target image region. In this way, for example, the harmony of color in a reference image can inform the selection of color from the reference image for colorization or recoloring of a target image, which can help produce colorized or re-colored images that are more harmonious and have fewer visual artifacts.

BRIEF DESCRIPTION OF THE DRAWINGS

FIG. 1 is a block diagram of an image collection device according to various embodiments.

FIG. 2 is a flowchart of an example of a method according to various embodiments.

FIG. 3 is an illustration of a greyscale target image to be colorized according to various embodiments.

FIG. 4 illustrates a color reference image according to various embodiments.

FIG. 5 illustrates some potential matches of patches in a target image and reference image according to various embodiments.

FIG. 6 illustrates an example of the results of weighting the potential matches based on a harmony descriptor according to various embodiments.

FIG. 7 is a flowchart of an example of post-processing that may be applied according to various embodiments.

FIGS. 8A-B show a conceptual illustration of an example of an implementation of the method of FIG. 7 according to various embodiments.

FIG. 9 illustrates another example of an apparatus according to various embodiments.

It should be understood that the drawings are for purposes of illustrating the concepts of the disclosure and are not necessarily the only possible configurations for illustrating the disclosure.

DETAILED DESCRIPTION

Many computer-automated processes for colorization of grayscale images and re-coloring of color images require a large amount of human interaction in order to achieve satisfactory results, e.g., to identify visual objects in an image, to select appropriate colors for the visual objects, etc. While there are some highly-automated computer processes that require little or no human interaction, these processes typically produce results that suffer from visual artifacts and inappropriately colored areas.

Described herein are various systems and methods for colorizing images and re-coloring images that may produce better results and at the same time may be highly-automated. A color reference image can be used to colorize or re-color a target image based on one or more descriptors of the target and reference images and a harmony descriptor that represents a color harmony of the second image. In various embodiments, for example, descriptors of the target and reference images can be analyzed to determine regions of the reference image that correspond to regions of the target image. The descriptors can include, for example, luminance, a histogram of oriented gradients, a histogram of texture gradients, etc. The analysis can be guided by a harmony descriptor of the reference image. For example, the analysis can search for reference image regions that are similar to target image regions based on similarity of luminance and texture gradients, and the analysis can be weighted based on a harmony descriptor such that the analysis favors reference image regions having colors that are more harmonious. When correspondence is found between a reference image region and a target image region, the color of the reference image region can be used to colorize or re-color the corresponding target image region. In this way, for example, the harmony of color in a reference image can inform the selection of color from the reference image for colorization or recoloring of a target image, which can help produce colorized or re-colored images that are more harmonious and have fewer visual artifacts.

Potential applications can include, for example, re-coloring pictures where the color is so degraded that it cannot be recovered by conventional post-processing, video compression where some bits may be saved (those associated to colors) to be recovered at the decoder side by the colorization process, change of an image look by using a semantically similar color reference picture with a color palette different from the color target picture, etc. Another potential application includes colorization of movies. For example, a first image frame in a scene can be colorized or re-colored using traditional color processes, then the first image frame can serve as a color reference image for the next image frame, to be colored using the techniques described herein. Once the next image frame is colorized or re-colored, it can serve as a color reference image for the next image frame, and so on.

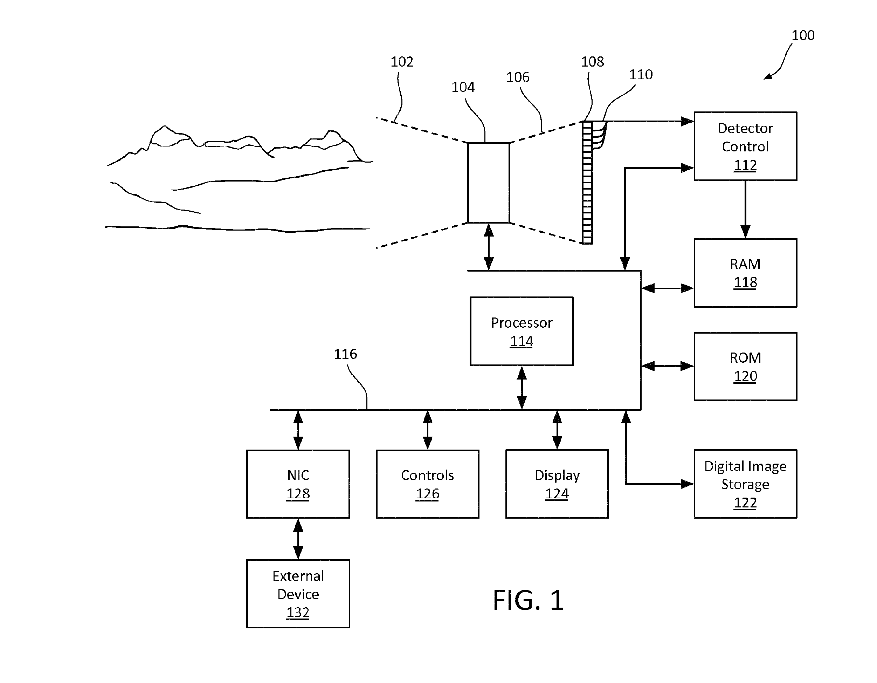

The techniques described herein may be implemented in any kind of device that can perform image processing, such as a personal computer executing image processing software, an image collection device, e.g., a camera, video camera, etc., that includes image processing functionality, a smart phone, a tablet computer, etc. For example, FIG. 1 is a block diagram of an image collection device 100 according to various embodiments. In FIG. 1, light 102 reflected from a scene can be collected and focused by optical elements 104. The focused light 106 can be projected onto a detector 108, which may be, for example, a charge coupled device or other kind of light detection system. Focused light 106 can be converted by detector 108 into an electrical signal, and can be then transferred over signal lines 110 to a detector controller 112. In detector controller 112, the individual signals from detector 108 can be converted into a digital image. The digital image may then be transferred by a processor 114 over a bus 116 to a random access memory (RAM) 118 for further processing. RAM 118 may be a dynamic RAM (DRAM), a static RAM (SRAM), a flash memory module, or other kind of computer memory.

Optical elements 104 may be connected to the bus 116 to allow optical elements 104 to be controlled by processor 114. For example, processor 114 may adjust the focus, the stop, or other properties of optical elements 104 through bus 116.

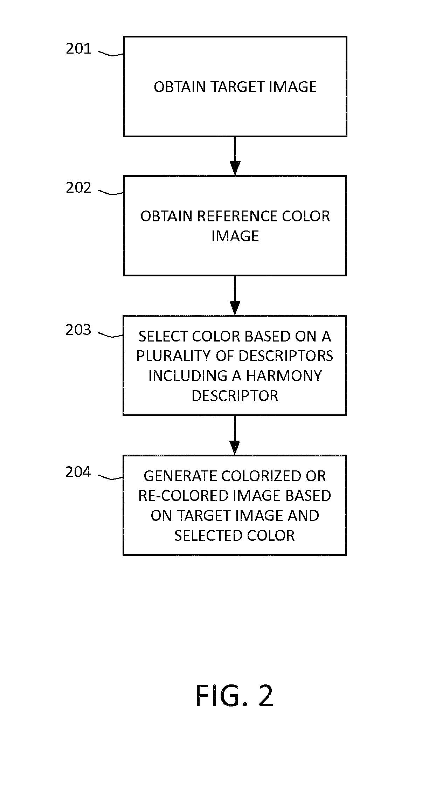

Processor 114 may be controlled by image collection and processing programs contained in a read only memory (ROM) 120 that can be accessible from bus 116. The programs do not have to be in a ROM, but may be contained in any type of long-term memory, such as a disk drive, a flash card, or an electrically erasable programmable read only memory (EEPROM), among others. Generally, the programs in ROM 120 may include the image coloring or re-coloring procedures discussed with respect to FIGS. 2-8.

The digital image may be stored before or after processing in a separate digital image storage 122, such as a digital video tape, a recordable optical disk, a hard drive, and the like. Digital image storage 122 may also be combined with the program storage. For example, a disk drive may be used both to store both programs and digital images.

The images may be displayed on a display unit 124 that may be connected to bus 116. Controls 126 may also be connected to bus 116 to control the collection and processing of the images by processor 114. Such controls 126 may include keypads, selection knobs, and separate buttons for functions such as zooming, focusing, starting the collection of images, etc.

Images may be transferred from image collection device 100 through a network interface controller (NIC) 128 that may be connected to bus 116. NIC 128 may be connected to an external local area network (LAN), which may be used to transfer the images to an external device 132 located on LAN.

The arrangement of the functional blocks presented above is only one possible arrangement, and any number of other arrangements may be used. For example, NIC 128 may be directly coupled to an area of RAM 118 to allow direct memory access, or DMA, transfers to occur directly to and from RAM 118 of the digital collection device. This may accelerate data transfers when a large amount of data is involved, such as in a high definition digital video camera. Further, in other arrangements controls 126 and display 128 may be combined into a single unit. In yet other combinations, display 128 may be directly connected to detector controller 112 to off-load the display function from processor 114.

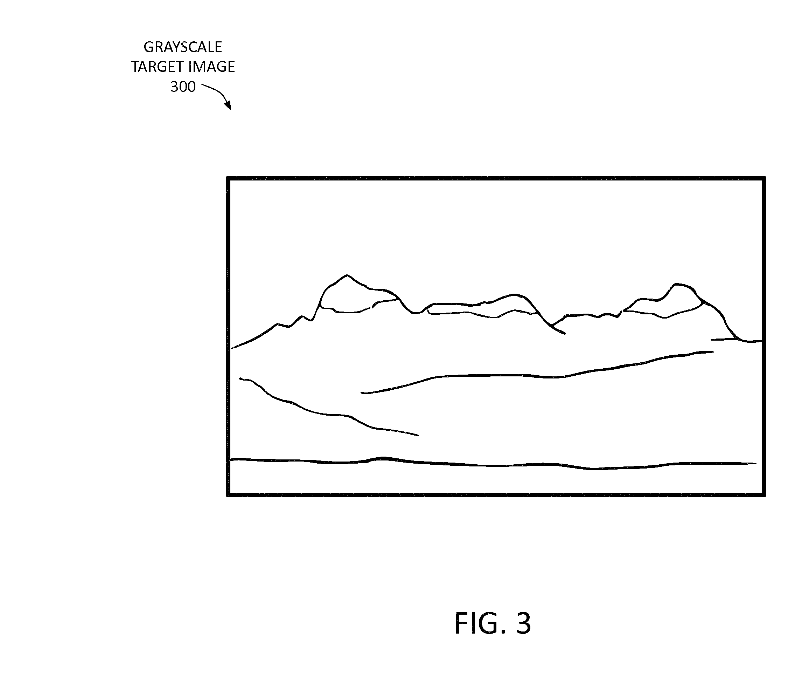

FIG. 2 is a flowchart of an example of a method according to various embodiments. In some embodiments, the method may be implemented to colorize grayscale images. In some embodiments, the method may be implemented to recolor a color image. FIGS. 3-6 are conceptual drawings to illustrate an example of an implementation of the method of FIG. 2 to colorize grayscale images according to various embodiments. During the description of the method of FIG. 2 below, FIGS. 3-6 will be referenced in order to illustrate how the method of FIG. 2 can be implemented according to one particular embodiment.

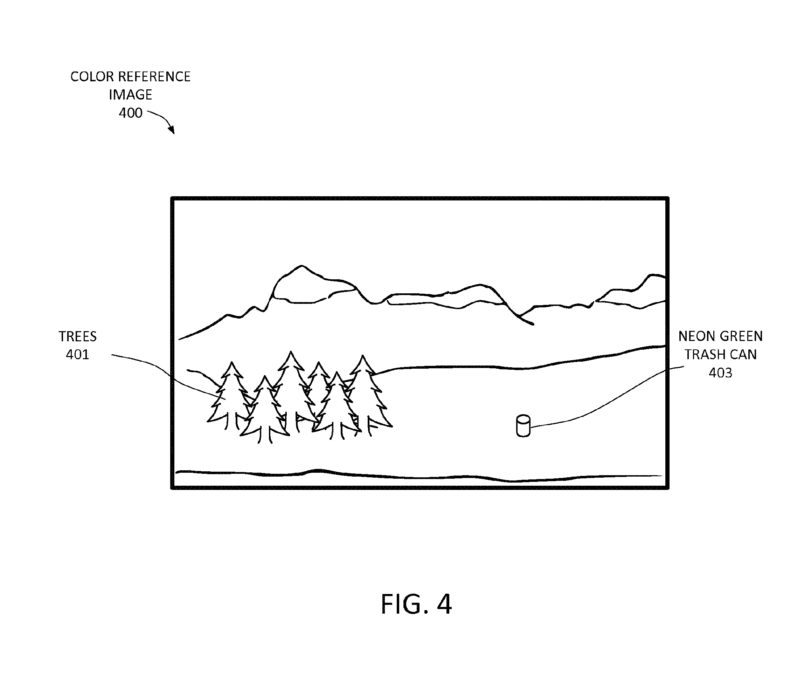

Referring to FIG. 2, a target image (e.g., a grayscale image to be colorized or a color image to be re-colored) can be obtained (201) and a color reference image can be obtained (202). For example, the target and reference images can be obtained from the memory of an image processing device, such as digital image storage 122 of image collection device 100. For example, FIG. 3 is an illustration of a target greyscale image 300 to be colorized, and FIG. 4 is an illustration of a color reference image 400. In this example, the content of the reference image is not the same as the content of the target image. The content of an image refers to the "scene" of an image, i.e., the visual objects in the image, as well as their size, proportion, and arrangement. In the example of FIGS. 3 and 4, target image 300 and reference image 400 are different pictures of the same mountain range. Although the contents of the images may be similar because they are pictures of the same object (i.e., the mountain range), the viewpoints of the pictures are not the same, and therefore, the contents of the images are not the same. For example, the size and proportion of the mountain range in reference image 400 are different than in target image 300. In addition, the different viewpoint of reference image 400 includes different objects, such as trees 401 and a neon green trash can 403.

Other examples of images with different contents include images of different objects, such as images of different mountain ranges, images of different people, an image of a car and an image of a truck, etc. Yet another example of images with different contents can include different image frames of a movie, for example, sequential image frames. In this regard, it should be noted that any motion produces slight differences between sequential image frames of a movie, with the result that the contents of the sequential image frames are not the same.

It should be noted that although examples are described using target and reference images that have different content, the techniques described herein could be implemented using target and reference images that have the same content, e.g., a greyscale target image and a colorized version of the greyscale image as the reference image, a color target image and a re-colored version of the color target image as the reference image, etc.

Color from the reference image can be selected (203) based one or more descriptors of the target and reference images and based on a harmony descriptor that represents a color harmony of the reference image. A colorized or re-colored image can be generated (204) based on the target image and the selected color.

In various embodiments, selecting color from the reference image can include determining that a region of the reference image corresponds to a region of the target image based on the one or more descriptors of the target and reference images and selecting color from that region of the reference image. The descriptors can be, for example, based on luminance. For example, in various embodiments, the descriptors can include luminance itself ($Y'_T$ and $Y'_R$), histograms of oriented gradients ($HOG_T$ and $HOG_R$), and texture gradients ($TG_T$ and $TG_R$), where T denotes target image and R denotes reference image. These descriptors can be extracted in a dense manner, e.g., computed for each pixel of the image. For each pixel, the computed descriptors can be concatenated into one feature vector that can have a dimension equal to 38, i.e., 31 HOG values, 6 TG values, and 1 Y' value. The use of descriptors can allow matches to be found not only for the same objects in different images, but also for generally similar objects.

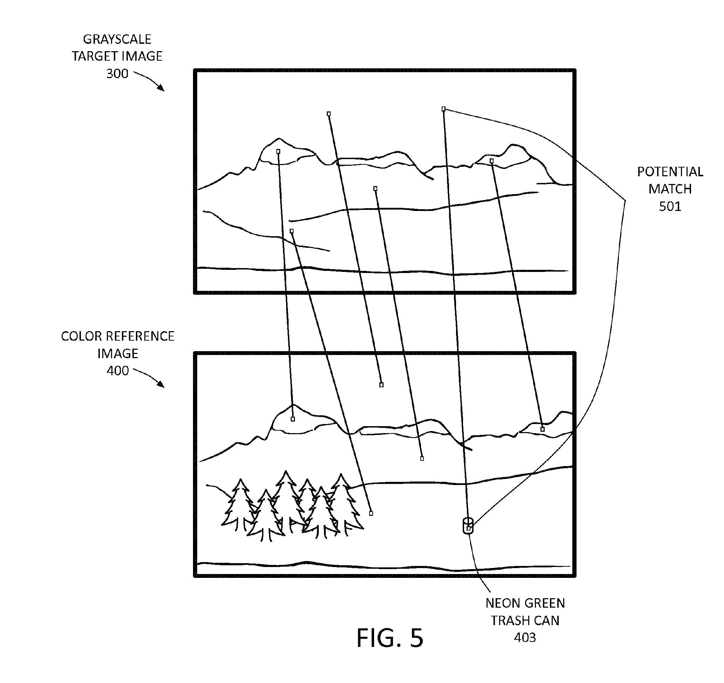

In various embodiments, a PatchMatch algorithm can be applied to the feature vectors to compute an approximate nearest neighbor field that indicates corresponding pairs of image patches (i.e., regions) between the target and reference images. For example, FIG. 5 illustrates some potential matches, such as potential match 501, of patches in target image 300 and reference image 400. While only a few potential matches are shown, it should be understood that the PatchMatch algorithm can determine matches for all patches in the target image. In the example of FIG. 5, the PatchMatch algorithm can be based on luminance-based descriptors, such as luminance, histograms of oriented gradients, and texture gradients. In this example, the PatchMatch algorithm can correctly determine that patches in trees 401 do not correspond to any patches in target image 300 because, for example, the HOG values and the TG values of the tree patches are not similar to any target image patches. On the other hand, in this example, the Y' values, HOG values, and TG values of a patch in neon green trash can 403 are determined to be similar to the Y' values, HOG values, and TG values of a patch of sky in target image 300.

However, potential matches computed by the PatchMatch algorithm can be weighted based on the harmony descriptor, which is one example of how selecting color can be based on a harmony descriptor. The harmony descriptor can be computed for each patch of the reference image, and potential matches identified by the PatchMatch algorithm can be weighted based on the harmony descriptor to favor reference image patches that are more harmonious over reference image patches that are less harmonious. In this way, for example, reference image patches that are not harmonious can be essentially barred from being matched, reference image patches that are very harmonious can be favored, and reference image patches that are of average harmony can be matched only if the PatchMatch algorithm determines there is a very strong correspondence with a target image patch. In this way, for example, this use of harmony descriptors may help preclude the introduction of inharmonious colors from the reference image into the colorization or re-coloring of the target image.

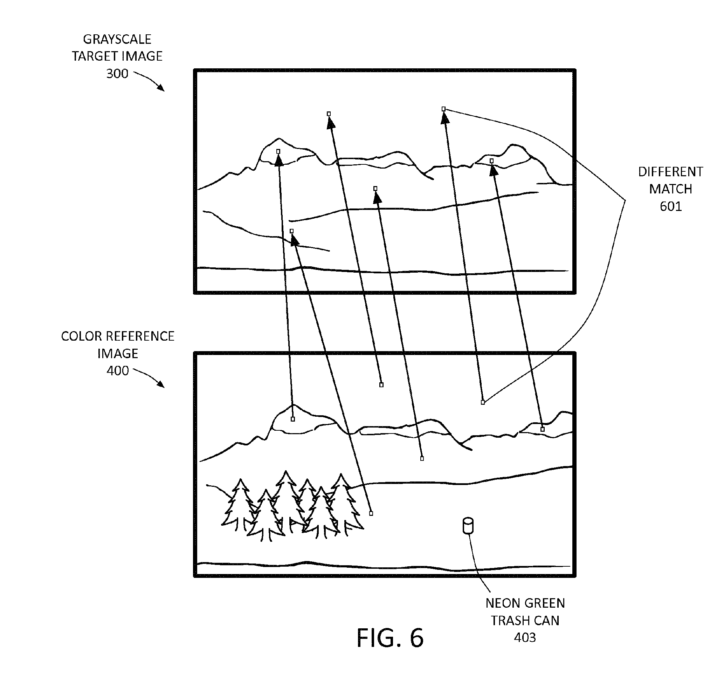

FIG. 6 illustrates an example of the results of weighting the potential matches based on a harmony descriptor. In this example, the neon green color of trash can 403 can have a very low harmony value, i.e., is not harmonious with the other colors in reference image 400. As a result, the PatchMatch algorithm can reject the potential match of the trash can patch with the sky patch in target image 300, and the algorithm can select a different match 601, as shown in FIG. 6.

In other embodiments, the harmony descriptor can be applied as a threshold, for example, by determining whether a value of the harmony descriptor of a region of the reference image satisfies a predetermined threshold value and excluding color of the region from being selected if the value of the harmony descriptor does not satisfy the threshold value.

As a result of the PatchMatch algorithm, a correspondence field of image patches can be obtained. The correspondence field of image patches can be used to select color for a colorized or re-colored image based on the target image. Generating the colorized or re-colored image can include coloring a region of the target image based on the selected color from the corresponding region of the reference image. For example, for reference image regions that have a single color, such as reference image regions that cover only a single pixel, the color of the reference image region can be used as the color for the corresponding target image region. For reference image regions that include two or more colors, a most frequent color can be selected, for example, and a portion of the the corresponding target image region can be seeded with the selected color. The seeded color can then be diffused to color remaining portions of the target image.

FIG. 6 shows arrows from the patches in reference image 400 to the corresponding patches in target image 300. The arrows illustrate selection of color from the reference image patches being applied to the corresponding target image patches. In this way, for example, a colorized image of target image 300 can be generated.

In various embodiments, obtaining the target and reference images can include image pre-processing, for example, smoothing the luminance information. Pre-processing the target and reference images, for example, may improve the quality of matching results obtained by matching algorithms such as PatchMatch algorithms discussed above. For instance, the presence of compression artifacts or specific texture features in the target or reference image might change local gradient and texture properties of the image, thus leading to possible mismatches. In situations such as these, pre-processing the target and reference images by smoothing luminance can help produce better matches. For example, the target and reference images can be pre-processed by applying Gaussian lowpass filtering, with a kernel size 5x5, and sigma value $\sigma = 1$.

$$G(x, y) = \frac{1}{2\pi\sigma^2} e^{-\frac{x^2 + y^2}{2\sigma^2}}$$

(2)

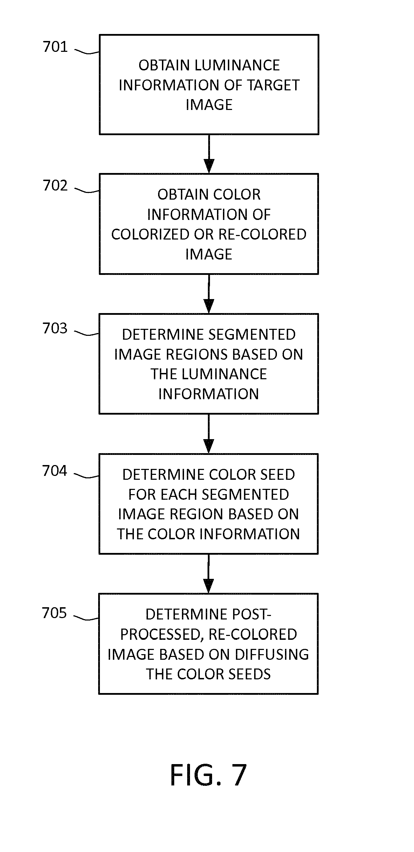

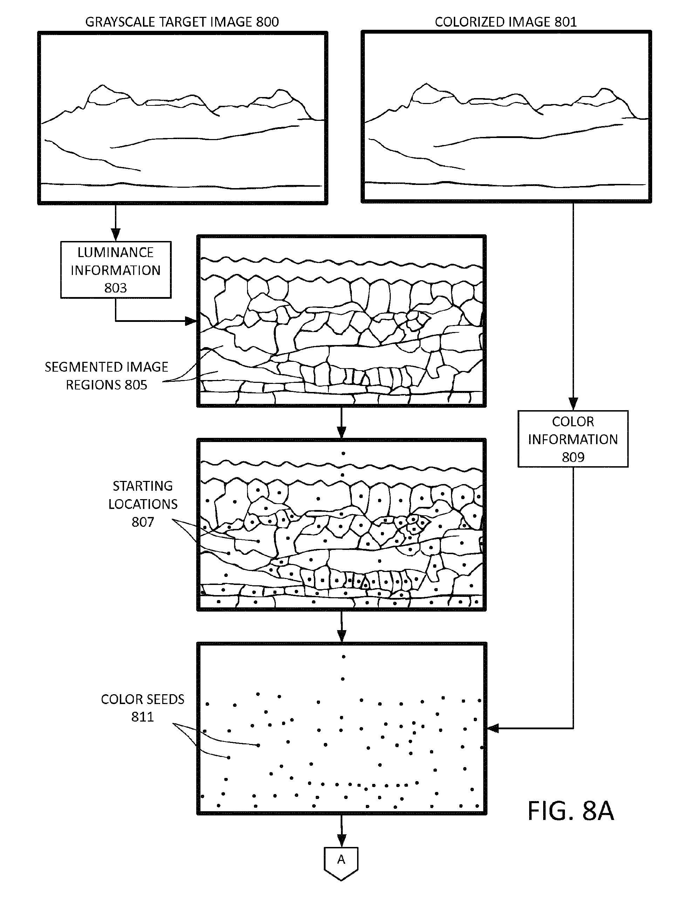

In various embodiments, post-processing can be applied to the colorized or re-colored image. For example, FIGS. 7 and 8A-B illustrate an example of post-processing that can be applied. FIG. 7 is a flowchart of the example of post-processing, and FIGS. 8A-B show a conceptual illustration of an example of an implementation of the method of FIG. 7 to post-process a colorized image 801 of a grayscale target image 800. During the description of the method of FIG. 7 below, FIGS. 8A-B will be referenced in order to illustrate how the method of FIG. 7 can be implemented according to one particular embodiment. It should be noted that the example of post-processing could also be applied to post-process a re-colored image of a color target image.

Referring to FIG. 7, luminance information of the target image can be obtained (701). The luminance information can include, for example, luminance components of the target image, such as values of a luminance channel at each pixel. Color information of the colorized or re-colored image can be obtained (702). The color information can include, for example, color components of the colorized or re-colored image, such as values of color channels at each pixel. Segmented image regions can be determined (703) based on the luminance information of the target image. Segmentation can include superpixel segmentation, which can estimate consistent regions by grouping pixels into perceptually meaningful regions. The pixel groupings can capture image redundancy, provide a convenient primitive from which to compute image features, and reduce the complexity of subsequent image processing tasks. In some cases a superpixel algorithm, by itself, may create over-segmentation or under-segmentation, which may lead to additional color artifacts. In various embodiments, segmentation can include a modified superpixel segmentation that may mitigate creation of additional artifacts. A modified superpixel segmentation can include over-segmenting the image and then merging superpixels that are spatially close and have similar statistics (e.g., similar luminance mean and variance). For example, after a superpixel algorithm is applied, adjacent superpixels S1 and S2 can be merged if:

$$\sqrt{(\mu_{S2} - \mu_{S1})^2 + (\sigma_{S2} - \sigma_{S1})^2} \qquad (1)$$

Where $\mu_{S2}$, $\mu_{S1}$ and $\sigma_{S2}$, $\sigma_{S1}$ are the mean and variance of the considered superpixels, respectively. T is a threshold, which can be set to 2.5.

It should be noted that superpixel segmentation is merely one type of segmentation that can be used. However, other methods for segmenting images can be implemented, as one skilled in the art will readily understand. In various embodiments, segmentation can be based on luminance information, for example, luminance components of the target image, such as grayscale target image 300.

FIG. 8A shows luminance information 803 can be obtained from grayscale target image 800, and segmented image regions 805 can be determined based on the luminance information.

A color seed can be determined (704) for each segmented image region based on the color information of the colorized or re-colored image. In various embodiments, determining a color seed for each segmented image region can include determining a starting location, such as a morphological skeleton (e.g., a medial axis representation), a point, etc., corresponding to the segmented image region and associating color with the morphological skeleton, where the associated color is based on the color information of the colorized or re-colored image. For example, the segmented image regions can provide a basis for determining morphological skeletons. In various embodiments, the segmented image regions also can provide a basis for determining the colors to be associated with the morphological skeletons. In some embodiments, the color associated with each morphological skeleton can be based on the color in the segmented image region in the colorized or re-colored image. For example, associating color with each morphological skeleton can include determining a most frequent color of the segmented image region in the colorized or re-colored image. In various embodiments, the color associated with each morphological skeleton can be determined based on a mean color, a median color, etc., of the segmented image region in the colorized or re-colored image. Other ways to determine the color to associate with each morphological skeleton can include, for example, clustering the hues in the colorized or re-colored image and assigning a closest hue to each segmented image region, using one or more of various voting schemes, etc., as one skilled in the art will readily understand.

Similar techniques can be used to determine points or other shapes as starting locations, and to seed the starting locations with color. For example, each starting location can be determined as a center point of each segmented image region.

FIG. 8A shows a starting location 807 determined for each segmented image region. For the sake of clarity, starting locations 807 are shown as dots in FIG. 8A. However, it should be understood that the starting locations can be, e.g., points, morphological skeletons, other strokes, etc. Color information 809 can be obtained from colorized image 801, and starting locations 807 can be seeded with color based on the color information to obtain color seeds 811.

A post-processed, re-colored image can be determined (705) based on diffusing the color seeds. In various embodiments, color diffusion from morphological skeletons or other starting locations can be based, for example, on Levin's algorithm. For example, in YUV color space, where Y is the monochromatic luminance channel, which may be referred to simply as intensity, and U and V are the chrominance channels encoding the color, the algorithm can impose a constraint that two neighboring pixels r; s should have similar colors if their intensities are similar. Thus, the algorithm minimizes the difference between the color U(r) at pixel r and the weighted average of the colors U(s) at neighboring pixels, where U(s) is weighted with a weighting function that is large (e.g. sums to one) when Y(r) is similar to Y(s) and is small (e.g., sums to zero) when the two intensities are different. Similar weighting functions are used in image segmentation algorithms, where they are usually referred to as affinity functions. Levin's algorithm can take into account the luminance of nearby pixels, such that if the luminance is similar the color is diffused to the nearby pixel, and if the luminance is not similar the color is not diffused. At any given pixel, color diffusion from one morphological skeleton potentially can overlap with color diffusion from one or more other morphological skeletons. In these cases, various methods can be used to determine the final color assigned to the pixel. In various embodiments, for example, a confidence value can be determined for the diffused color from each morphological skeleton. The confidence values can be compared, and the diffused color with the highest confidence value can be assigned to the pixel. In other embodiments, a weight can be determined for the diffused color from each morphological skeleton, and the diffused colors can be combined based on the weights to obtain a final color value assigned to the pixel. In various embodiments, weights and/or confidence levels can be based on factors including, for example, distance from the morphological skeleton, morphological skeleton size, differences between the overlapping diffused colors, etc. Other methods of diffusing color may be used, such as methods that take into account texture, boundaries, etc., such as one skilled in the art will readily understand.

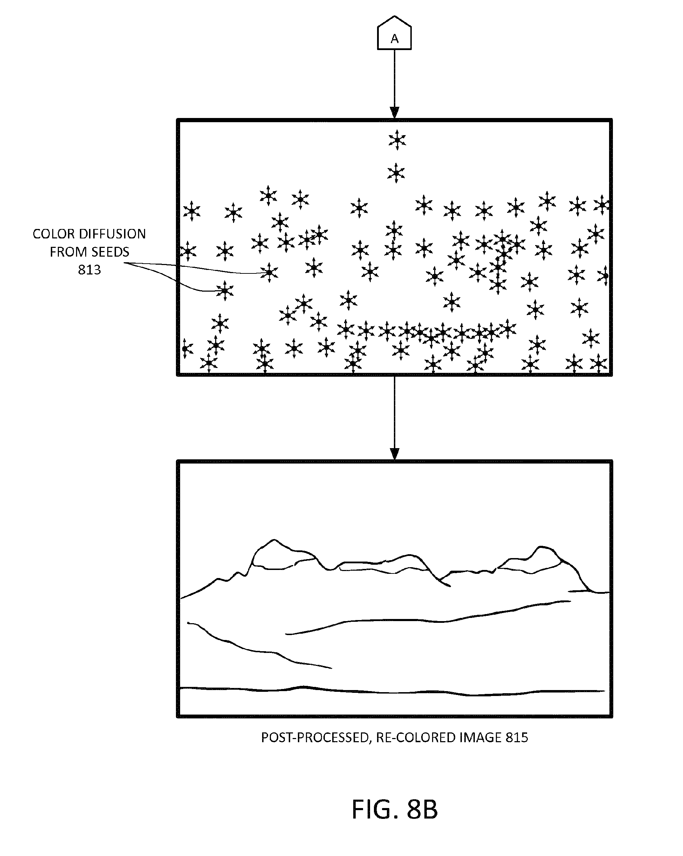

In FIG. 8B, color diffusion 813 from seeds is illustrated by small arrows extending from color seeds 811 (shown in FIG. 8A). A post-processed, re-colored image 815 can be determined based on color diffusion 813. In various embodiments the post-processed, re-colored image can be the direct result of the color diffusion. In some embodiments, other processing can be applied to the result of the color diffusion to obtain a final post-processed, re-colored image. Other processing can include, for example, gamma correction, color saturation adjustment, etc.

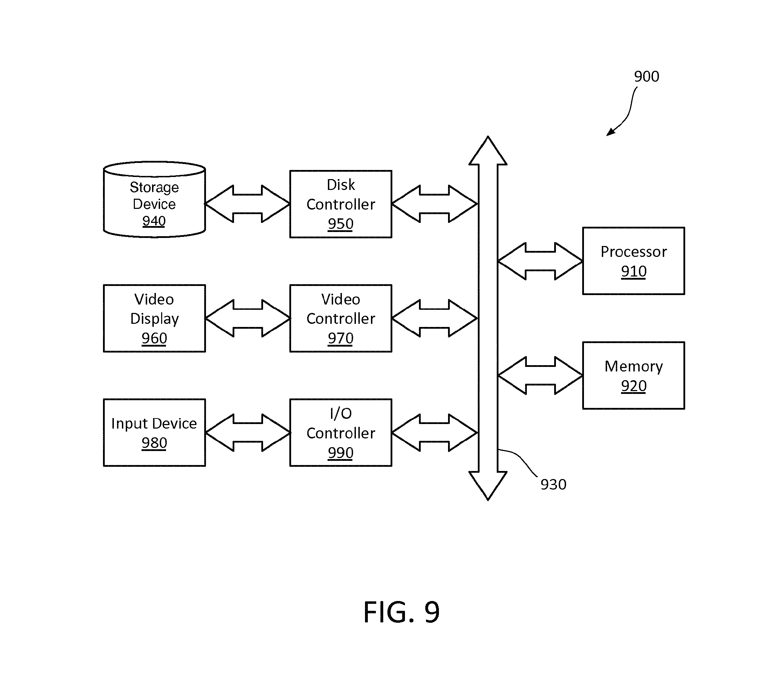

FIG. 9 illustrates another example of an apparatus according to various embodiments. FIG. 9 is a block diagram of an apparatus 900 for implementing various techniques described above for coloring and re-coloring digital images. Apparatus 900 may be implemented, for example, as a general-purpose computing platform.

Apparatus 900 can include a processor 910 for executing the computer-executable programs that perform various techniques described above. The programs may be stored in a memory 920, which may also store image data. A bus 930 can connect processor 910 and memory 920 to each other and to other components of apparatus 900. In some embodiments, apparatus 900 may include multiple processors or processors with multiple processing cores, which may execute various parts of programs in parallel.

A mass storage device 940 can be connected to bus 930 via a disk controller 950. Mass storage device 940 may contain image or video data, as well as an operating system, other programs, other data, etc. Disk controller 950 may operate according to Serial Advanced Technology Advancement (SATA), Small Computer System Interface (SCSI), or other standards, and may provide connection to multiple mass storage devices.

A video display 960 can be connected to bus 930 via a video controller 970. Video controller 970 may provide its own memory and graphics-processing capability for use in implementing or accelerating certain aspects of the colorization, re-colorization, or color correction processes, as well as for providing the functions of image and UI display.

An input device 980 can be connected to bus 930 via an input/output (I/O) controller 990. I/O controller 990 may utilize one or more of USB, IEEE 1394a, or other standards. Multiple input devices may be connected, such as keyboards, mice, and trackpads. Image and video capture devices may also be connected to the system through I/O controller 990 or additional I/O controllers implementing other I/O standards. Networking functionality may be provided by I/O controller 990 or a separate I/O controller.

Thus, various embodiments can include a system including a processor and a memory storing instructions configured to cause the processor to obtain a first image, obtain a color second image, select color from the second image based one or more descriptors of the first and second images and based on a harmony descriptor, the harmony descriptor representing a color harmony of the second image, and generate a color third image based on the first image and the selected color. In various embodiments, the processor selects color by determining that a region of the second image corresponds to a region of the first image based on the one or more descriptors of the first and second images and selects color from the region of the second image that corresponds to the region in the first image, and the processor generates the third image by coloring the region of the first image based on the selected color. In various embodiments, the processor determines that the region of the second image corresponds to the region of the first image by performing a patchmatch algorithm based on the one or more descriptors of the first and second images. In various embodiments, the processor determines that the region of the second image corresponds to the region of the first image by weighting the one or more descriptors based on the harmony descriptor. In various embodiments, the one or more descriptors are based on luminance. In various embodiments, the one or more descriptors include at least one of a luminance, a histogram of oriented gradients, and a histogram of texture gradients. In various embodiments, the processor selects color by determining whether a value of the harmony descriptor of a region of the second image satisfies a predetermined threshold value, and excluding color of the region from being selected if the value of the harmony descriptor does not satisfy the threshold value. In various embodiments, the content of the second image is not the same as the content of the first image.

Various embodiments can include a method including obtaining a first image, obtaining a color second image, selecting color from the second image based one or more descriptors of the first and second images and based on a harmony descriptor, the harmony descriptor representing a color harmony of the second image, and generating a color third image based on the first image and the selected color. In various embodiments, selecting color includes determining that a region of the second image corresponds to a region of the first image based on the one or more descriptors of the first and second images and selecting color from the region of the second image that corresponds to the region in the first image, and generating the third image includes coloring the region of the first image based on the selected color. In various embodiments, determining that the region of the second image corresponds to the region of the first image includes performing a patchmatch algorithm based on the one or more descriptors of the first and second images. In various embodiments, determining that the region of the second image corresponds to the region of the first image includes weighting the one or more descriptors based on the harmony descriptor. In various embodiments, the one or more descriptors are based on luminance. In various embodiments, the one or more descriptors include at least one of a luminance, a histogram of oriented gradients, and a histogram of texture gradients. In various embodiments, selecting color includes determining whether a value of the harmony descriptor of a region of the second image satisfies a predetermined threshold value, and excluding color of the region from being selected if the value of the harmony descriptor does not satisfy the threshold value. In various embodiments, the content of the second image is not the same as the content of the first image.

Various embodiments can include a non-transitory computer-readable medium storing computer-executable instructions executable to perform a method including obtaining a first image, obtaining a color second image, selecting color from the second image based one or more descriptors of the first and second images and based on a harmony descriptor, the harmony descriptor representing a color harmony of the second image, and generating a color third image based on the first image and the selected color. In various embodiments, selecting color includes determining that a region of the second image corresponds to a region of the first image based on the one or more descriptors of the first and second images and selecting color from the region of the second image that corresponds to the region in the first image, and generating the third image includes coloring the region of the first image based on the selected color. In various embodiments, determining that the region of the second image corresponds to the region of the first image includes performing a patchmatch algorithm based on the one or more descriptors of the first and second images. In various embodiments, determining that the region of the second image corresponds to the region of the first image includes weighting the one or more descriptors based on the harmony descriptor. In various embodiments, the one or more descriptors are based on luminance. In various embodiments, the one or more descriptors include at least one of a luminance, a histogram of oriented gradients, and a histogram of texture gradients. In various embodiments, selecting color includes determining whether a value of the harmony descriptor of a region of the second image satisfies a predetermined threshold value, and excluding color of the region from being selected if the value of the harmony descriptor does not satisfy the threshold value. In various embodiments, the content of the second image is not the same as the content of the first image.

It will be recognized by one skilled in the art that various aspects of the methods of the present disclosure may be executed in parallel on multiple systems to provide faster processing. For instance, in the case of processing a video file, frames may be divided among tens or hundreds of computing systems to provide parallel processing. Particular components, such as video display 960, may be omitted in some systems in some operating environments. Furthermore, multiple systems may utilize shared storage accessed via an I/O bus or via a network.

It will be further recognized by one skilled in the art that apparatus 900 may be implemented within an image capture device such as a digital still camera or digital video camera. Various techniques disclosed herein may be implemented by apparatus 900 at the time of image capture to color, re-color, or perform color correction.

It should also be appreciated that although various examples of various embodiments have been shown and described in detail herein, those skilled in the art can readily devise other varied embodiments that still remain within the scope of this disclosure.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry, electrical components, optical components, etc., embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function, software in any form, including, therefore, firmware, microcode or the like, combined with appropriate circuitry for executing that software to perform the function, etc. The disclosure as defined by such claims resides in the fact that the functionalities provided by the various recited means are combined and brought together in the manner which the claims call for. It is thus regarded that any means that can provide those functionalities are equivalent to those shown herein.

**Claims**

1. A system (100, 900) comprising:

   a processor (114, 910); and
   a memory (118, 920) storing instructions configured to cause the processor to:

   obtain a first image;
   obtain a color second image;
   select color from the second image based one or more descriptors of the first and second images and based on a harmony descriptor, the harmony descriptor representing a color harmony of the second image; and
   generate a color third image based on the first image and the selected color.

2. The system of claim 1, wherein the processor selects color by determining that a region of the second image corresponds to a region of the first image based on the one or more descriptors of the first and second images and selects color from the region of the second image that corresponds to the region in the first image, and wherein the processor generates the third image by coloring the region of the first image based on the selected color.

3. The system of claim 2, wherein the processor determines that the region of the second image corresponds to the region of the first image by weighting the one or more descriptors based on the harmony descriptor.

4. The system of claim 1, wherein the one or more descriptors are based on luminance.

5. The system of claim 1, wherein the content of the second image is not the same as the content of the first image.

6. A method comprising:

   obtaining (201) a first image;
   obtaining (202) a color second image;
   selecting (203) color from the second image based one or more descriptors of the first and second images and based on a harmony descriptor, the harmony descriptor representing a color harmony of the second image; and
   generating (204) a color third image based on the first image and the selected color.

7. The method of claim 6, wherein selecting color includes determining that a region of the second image corresponds to a region of the first image based on the one or more descriptors of the first and second images and selecting color from the region of the second image that corresponds to the region in the first image, and wherein generating the third image includes coloring the region of the first image based on the selected color.

8. The method of claim 7, wherein determining that the region of the second image corresponds to the region of the first image includes weighting the one or more descriptors based on the harmony descriptor.

9. The method of claim 6, wherein the one or more descriptors are based on luminance.

10. The method of claim 6, wherein the content of the second image is not the same as the content of the first image.

11. A non-transitory computer-readable medium (120, 940) storing computer-executable instructions executable to perform a method comprising:

obtaining (201) a first image;

obtaining (202) a color second image;

selecting (203) color from the second image based one or more descriptors of the first and second images and based on a harmony descriptor, the harmony descriptor representing a color harmony of the second image; and

generating (204) a color third image based on the first image and the selected color.

12. The non-transitory computer-readable medium of claim 11, wherein selecting color includes determining that a region of the second image corresponds to a region of the first image based on the one or more descriptors of the first and second images and selecting color from the region of the second image that corresponds to the region in the first image, and wherein generating the third image includes coloring the region of the first image based on the selected color.

13. The non-transitory computer-readable medium of claim 12, wherein determining that the region of the second image corresponds to the region of the first image includes weighting the one or more descriptors based on the harmony descriptor.

14. The non-transitory computer-readable medium of claim 11, wherein the one or more descriptors are based on luminance.

15. The non-transitory computer-readable medium of claim 11, wherein the content of the second image is not the same as the content of the first image.

FIG. 1

201 — OBTAIN TARGET IMAGE

202 — OBTAIN REFERENCE COLOR IMAGE

203 — SELECT COLOR BASED ON A PLURALITY OF DESCRIPTORS INCLUDING A HARMONY DESCRIPTOR

204 — GENERATE COLORIZED OR RE-COLORED IMAGE BASED ON TARGET IMAGE AND SELECTED COLOR

FIG. 2

GRAYSCALE
TARGET IMAGE
300

FIG. 3

COLOR REFERENCE
IMAGE
400

TREES
401

NEON GREEN
TRASH CAN
403

FIG. 4

GRAYSCALE
TARGET IMAGE
300

POTENTIAL
MATCH
501

COLOR REFERENCE
IMAGE
400

NEON GREEN
TRASH CAN
403

FIG. 5

GRAYSCALE
TARGET IMAGE
300

DIFFERENT
MATCH
601

COLOR REFERENCE
IMAGE
400

NEON GREEN
TRASH CAN
403

FIG. 6

701 — OBTAIN LUMINANCE INFORMATION OF TARGET IMAGE

702 — OBTAIN COLOR INFORMATION OF COLORIZED OR RE-COLORED IMAGE

703 — DETERMINE SEGMENTED IMAGE REGIONS BASED ON THE LUMINANCE INFORMATION

704 — DETERMINE COLOR SEED FOR EACH SEGMENTED IMAGE REGION BASED ON THE COLOR INFORMATION

705 — DETERMINE POST-PROCESSED, RE-COLORED IMAGE BASED ON DIFFUSING THE COLOR SEEDS

FIG. 7

GRAYSCALE TARGET IMAGE 800

COLORIZED IMAGE 801

LUMINANCE
INFORMATION
803

SEGMENTED IMAGE
REGIONS 805

COLOR
INFORMATION
809

STARTING
LOCATIONS
807

COLOR SEEDS
811

FIG. 8A

A

COLOR DIFFUSION
FROM SEEDS
813

POST-PROCESSED, RE-COLORED IMAGE 815

FIG. 8B

FIG. 9

EP 3 038 059 A1

**Europäisches Patentamt**
**European Patent Office**
**Office européen des brevets**

## EUROPEAN SEARCH REPORT

Application Number

EP 14 30 7126

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOCHANG LEE ET AL: "A Novel Color Transfer Algorithm for Impressionistic Paintings", 16 July 2012 (2012-07-16), ADVANCES IN VISUAL COMPUTING, SPRINGER BERLIN HEIDELBERG, BERLIN, HEIDELBERG, PAGE(S) 513 - 522, XP047014644, ISBN: 978-3-642-33178-7 * abstract * * figures 1-3,6 * * sections 1,3 * | 1,3-6, 8-11, 13-15 | INV. G06T11/00 |
| X | RAJ KUMAR GUPTA ET AL: "Image colorization using similar images", PROCEEDINGS OF THE 20TH ACM INTERNATIONAL CONFERENCE ON MULTIMEDIA, MM '12, 1 January 2012 (2012-01-01), page 369, XP055180298, New York, New York, USA DOI: 10.1145/2393347.2393402 ISBN: 978-1-45-031089-5 | 1-15 | |
| Y | * abstract * * figures 1,2 * * section 3 * | 1-15 | TECHNICAL FIELDS SEARCHED (IPC) |
| X | TOMIHISA WELSH ET AL: "Transferring color to greyscale images", ACM TRANSACTIONS ON GRAPHICS, vol. 21, 1 January 2002 (2002-01-01), page 277, XP055011480, ISSN: 0730-0301, DOI: 10.1145/566570.566576 | 1,6,11 | G06T G06K G09G H04N |
| Y | * abstract * * figure 1 * * section 1 last par., sections 2,2.2,4 * | 1,6,11 | |

-/--

The present search report has been drawn up for all claims

| Place of search | Date of completion of the search | Examiner |
|---|---|---|
| Munich | 10 April 2015 | Scholz, Volker |

EPO FORM 1503 03.82 (P04C01)

Europäisches
Patentamt

European
Patent Office

Office européen
des brevets

# EUROPEAN SEARCH REPORT

Application Number

EP 14 30 7126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MASASHI NISHIYAMA ET AL: "Aesthetic quality classification of photographs based on color harmony", COMPUTER VISION AND PATTERN RECOGNITION (CVPR), 2011 IEEE CONFERENCE ON, IEEE, 20 June 2011 (2011-06-20), pages 33-40, XP032038041, DOI: 10.1109/CVPR.2011.5995539 ISBN: 978-1-4577-0394-2 * abstract * * figures 2,6 * * section 3.2.2 * | 1-15 | |
| A | DANIEL COHEN-OR ET AL: "Color harmonization", ACM SIGGRAPH 2006 COURSES ON , SIGGRAPH '06, 1 January 2006 (2006-01-01), page 624, XP055075986, New York, New York, USA DOI: 10.1145/1179352.1141933 ISBN: 978-1-59-593364-5 * the whole document * | 1-15 | |
| T | Dmitry Kuzovkin ET AL: "Descriptor-Based Image Colorization and Regularization", Computational Color Imaging, 21 February 2015 (2015-02-21), pages 59-68, XP055179994, Cham ISBN: 978-3-31-915979-9 Retrieved from the Internet: URL:http://link.springer.com/content/pdf/10.1007/978-3-319-15979-9_6.pdf [retrieved on 2015-03-30] * the whole document * | 1-15 | |

**TECHNICAL FIELDS SEARCHED (IPC)**

The present search report has been drawn up for all claims

| Place of search | Date of completion of the search | Examiner |
|---|---|---|
| Munich | 10 April 2015 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)